# EUROPEAN PATENT SPECIFICATION

(11) **EP 1 805 442 B1**
(45) Date of publication and mention of the grant of the patent: **20.04.2011**
(21) Application number: 05851277.3
(22) Date of filing: 27.10.2005
(51) Int. Cl.: F16L 11/00, C08G 69/26, C08L 77/00, C08G 69/36

(54) **HYDROLYSIS RESISTANT POLYAMIDE COMPOSITIONS AND ARTICLES FORMED THEREFROM**
HYDROLYSERESISTENTE POLYAMIDZUSAMMENSETZUNGEN UND DARAUS GEFORMTE ARTIKEL
COMPOSITIONS POLYAMIDES RESISTANTES A L'HYDROLYSE ET ARTICLES FORMES A PARTIR DE CES COMPOSITIONS

(30) Priority: 27.10.2004 US 622513 P
(43) Date of publication of application: 11.07.2007
(73) Proprietor: E.I. DU PONT DE NEMOURS AND COMPANY, Wilmington, DE 19898 (US)
(72) Inventor: FISH, Robert, B., Parkersburg, West Virginia 25104 (US); MARTENS, Marvin, M., Vienna, West Virginia 26105 (US); MESTEMACHER, Steven, A., Parkersburg, West Virginia 26104 (US); PAGILAGAN, Rolando, Umali, Parkersburg, West Virginia 26104 (US)
(74) Representative: Heinemann, Monica
(86) International application number: PCT/US2005/039217
(87) International publication number: WO 2006/047775

(56) References cited:
- WO-A-93/21276
- US-A- 4 404 317
- US-B1- 6 191 207

## Description

### Field of the Invention

The present invention relates to hydrolysis resistant polyamide compositions having good flexibility, and various articles including tubular structures such as pipes and the like that may be made from these polyamide compositions.

### Background of the Invention

Due to their good physical properties and chemical resistance, various polyamides find many applications as engineering polymers. Such applications often require that the polyamide be in contact with water, and many applications require elevated temperatures. Examples include an undersea oil pipe that comes into contact with hot oil from the earth's interior and automobile radiator tubing. Under such conditions, the amide bonds of many polyamides may be susceptible to hydrolysis in the presence of water and the rate of hydrolysis increases with temperature. Hydrolysis of the amide bonds can cause a reduction in molecular weight and concomitant loss in physical properties that can result in failure of the pipe during use. Such a failure can be catastrophic, with the loss of fluid causing undesirable consequences ranging from the impairment of the performance of the device within which the piping is incorporated, to contact of the fluid with the surrounding environment.

Aliphatic polyamides such as polyamide 6,12 or polyamide 11 are frequently used to make pipes and other tubular structures, but many applications require greater hydrolysis resistance than can be obtained from currently available polyamides.

US 4,404, 317 decribes blends of at least one amorphous copolyamide and at least one semicrystalline polyamide, the amorphous copolyamide consisting of terephtalic acid, isophtalic acid, hexamethylene diamine and a cyclohexane-based diamine in specified amounts.

It would be desirable to obtain a polyamide having both good hydrolysis resistance and that could be conveniently plasticized to be useful in manufacturing pipes. A further object of the present invention is to provide piping, tubing and the like which is readily prepared from the instant compositions of the present invention as by conventional means well accepted in the field. A feature of the present invention is that the instant compositions are formable into any of a wide variety of structural designs and configurations. An advantage of the present invention is that these structural components can be further optimized for specialized functions with the addition of an assortment of additives including stabilizers, colorants, molding agents, and the like. These and other objects, features and advantages of the invention will become better understood upon having reference to the following description of the invention.

### Summary of the Invention

There is disclosed and claimed herein polyamide compositions comprising a polyamide comprising;
(a) about 3 to about 14 mole percent of repeat units derived from at least one aromatic dicarboxylic acid having 4 to 16 carbon atoms and/or at least one alicyclic dicarboxylic acid having 8 to 20 carbon atoms and at least one aliphatic diamine having 4 to 20 carbon atoms; and
(b) about 86 to about 97 mole percent of repeat units
   - derived from decanedioic acid, dodecanedioic acid, and hexamethylenediamine, or
   - derived from two or more of nonanedioic acid, decanedioic acid, undecanedioic acid, dodecanedioic acid, tridecanedioic acid, and tetradecanedioic acid; and hexamethylenediamine.

There is further disclosed and claimed herein a variety of articles of manufacture made from the instant composition, including without limitation tubular structures such as tubing and piping.

### Detailed Description of the Invention

There are a number of terms used throughout the specification for which the following will be of assistance in understanding their scope and meaning. As used herein and as will be understood by those skilled in the art, the terms "terephthalic acid", "isophthalic acid", and "dicarboxylic acid/dioic acid" refer also to the corresponding carboxylic acid derivatives of these materials, which can include carboxylic acid esters, diesters, and acid chlorides. Moreover and as used herein, and as will be understood by one skilled in the art, the term "hydrolysis resistant" in conjunction with a polyamide refers to the ability of the polyamide to retain its molecular weight upon exposure to water.

As used herein, the term "tubular structure" includes without limitation a variety of shapes such as "pipes", "tubing" and the like and refers to various bodies defining a cavity therethrough for conducting a fluid including without limitation any liquid, gas, or finely divided solid. These tubular structures (pipes and the like) may be flexible or stiff and have a variety of wall thicknesses and (in the event such pipes are circular in cross section) diameters. These pipes and the like may have a circular or roughly .circular (e.g. oval) cross-section. However more generally such pipes and the like may be shaped into seemingly limitless geometries so long as they define a passageway therethrough. For example suitable shapes may include polygonal shapes and may even incorporate more that one shape along the length thereof. Such tubular structures may further be joined together by suitable means to form T-sections, branches, and the like. Moreover, tubular structures may comprise multiple concentric layers, wherein at least one layer comprises a polyamide composition. Other layers may comprise other polymeric materials or metals.

For convenience of description only, the term "pipe" is used most regularly throughout the specification, although those having skill in the art will readily understand that such references also contemplate other shapes as described above.

The polyamide composition of the present invention comprises a polyamide comprising about 3 to about 14 mole percent, or preferably about 4 to about 12 mole percent, or more preferably about 5 to about 10 mole percent of repeat units (a) that are derived from at least one aromatic dicarboxylic acid having 8 to 16 carbon atoms and/or at least one alicyclic dicarboxylic acid having 8 to 20 carbon atoms and at least one aliphatic diamine having 4 to 20 carbon atoms. The polyamide further comprises about 86 to about 97 mole percent, or preferably about 88 to about 96 mole percent, or more preferably about 90 to about 95 mole percent of repeat units (b)
- derived from decanedioic acid, dodecanedioic acid, and hexamethylenediamine, or
- derived from two or more of nonanedioic acid, decanedioic acid, undecanedioic acid, dodecanedioic acid, tridecanedioic acid, and tetradecanedioic acid; and hexamethylenediamine.

By "aromatic dicarboxylic acid" is meant dicarboxylic acids in which each carboxyl group is directly bonded to an aromatic ring. Examples of suitable aromatic dicarboxylic acids include terephthalic acid; isophthalic acid; 1,5-nathphalenedicarboxylic acid; 2,6-nathphalenedicarboxylic acid; and 2,7-nathphalenedicarboxylic acid. Terephthalic acid and isophthalic acid are preferred. By "alicyclic dicarboxylic acid" is meant dicarboxylic acids in which each carboxyl group is directly bonded to a saturated hydrocarbon ring. An example of a suitable alicyclic dicarboxylic acids includes 1,4-cyclohexanedicarboylic acid.

Examples of aliphatic dicarboxylic acids having 6 to 36 carbon atoms include adipic acid, nonanedioic acid, decanedioic acid (also known as sebacic acid), undecanedioic acid, dodecanedioic acid, tridecanedioic acid, and tetradecanedioic acid. The aliphatic diamines having 4 to 20 carbon atoms may be linear or branched. Examples of preferred diamines include hexamethylenediamine, 2-methylpentamethylenediamine; 1,8-diaminooctane; methyl-1,8-diaminooctane; 1,9-diaminononane; 1,10-diaminodecane; and 1,12-diaminedodecane. Examples of lactams include caprolactam and laurolactam. An example of an aminocarboxylic acid includes aminodecanoic acid.

Preferred polyamides are semiaromatic polyamides. The polyamides preferably comprise repeat units (a) that are derived from terephthalic acid and/or isophthalic acid and hexamethylenediamine and repeats units (b) that are derived from two or more of nonanedioic acid and hexamethylenediamine; decanedioic acid and hexamethylenediamine; undecanedioic acid and hexamethylenediamine; dodecanedioic acid and hexamethylenediamine; tridecanedioic acid and hexamethylenediamine; tetradecanedioic acid and hexamethylenediamine.

A preferred polyamide comprises repeat units (a) that are derived from terephthalic acid and hexamethylenediamine and repeat units (b) that are derived from decanedioic acid, dodecanedioic acid, and hexamethylenediamine. The ratio of repeat units (b) derived from decanedioic acid and hexamethylenediamine to repeat units (b) derived from dodecanedioic acid and hexamethylenediamine is preferably between about 19:1 and 1:19, or more preferably between about 4:1 and 1:4.

The polyamide of the present invention may be prepared by any means known to those skilled in the art, such as in an batch process using, for example, an autoclave or using a continuous process. See, for example, Kohan, M.I. Ed. Nylon Plastics Handbook, Hanser: Munich, 1995; pp. 13-32. Additives such as lubricants, antifoaming agents, and end-capping agents may be added to the polymerization mixture.

The polyamide composition of the present invention may optionally comprise additives. A preferred additive is at least one plasticizer. The plasticizer will preferably be miscible with the polyamide. Examples of suitable plasticizers include sulfonamides, preferably aromatic sulfonamides such as benzenesulfonamides and toluenesulfonamides. Examples of suitable sulfonamides include *N-*alkyl benzenesulfonamides and toluenesufonamides, such as *N-*butylbenzenesulfonamide, *N-*(2-hydroxypropyl)benzenesulfonamide, *N-*ethyl-o-toluenesulfonamide, *N-*ethyl-*p-*toluenesulfonamide, *o-*toluenesulfonamide, *p-*toluenesulfonamide, and the like. Preferred are *N-*butylbenzenesulfonamide, *N-*ethyl-*o-*toluenesulfonamide, and *N-*ethyl-*p-*toluenesulfonamide.

The plasticizer may be incorporated into the composition by melt-blending the polymer with plasticizer and, optionally, other ingredients, or during polymerization. If the plasticizer is incorporated during polymerization, the polyamide monomers are blended with one or more plasticizers prior to starting the polymerization cycle and the blend is introduced to the polymerization reactor. Alternatively, the plasticizer can be added to the reactor during the polymerization cycle.

When used, the plasticizer will be present in the composition in about 1 to about 20 weight percent, or more preferably in about 6 to about 18 weight percent, or yet more preferably in about 8 to about 15 weight percent, wherein the weight percentages are based on the total weight of the composition.

The polyamide composition may optionally comprise additional additives such as thermal, oxidative, and/or light stabilizers; colorants; lubricants; mold release agents; and the like. Such additives can be added in conventional amounts according to the desired properties of the resulting material, and the control of these amounts versus the desired properties is within the knowledge of the skilled artisan.

When present, additives may be incorporated into the polyamide composition of the present invention by melt-blending using any known methods. The component materials may be mixed to homogeneity using a melt-mixer such as a single or twin-screw extruder, blender, kneader, Banbury mixer, etc. to give a polyamide composition. Or, part of the materials may be mixed in a melt-mixer, and the rest of the materials may then be added and further melt-mixed until homogeneous.

The polyamide composition of the present invention may be formed into shaped articles using any suitable melt-processing technique, such as injection molding, extrusion, blow molding, injection blow molding, thermoforming and the like.

Preferred articles include-tubular structures such as pipes and tubes. Examples of preferred tubular structures include, but are not limited to, tubing for use in vehicle radiators; flexible pipe, including undersea flexible oil pipes; above sea oil pipes; in-ground oil pipes; pipe liners; and components of marine umbilicals. Flexible pipes are described in U.S. patent 6,053,213, which is hereby incorporated herein by reference. The pipes may be formed such they comprise multiple layers, wherein one of the layers comprises the polyamide composition of the present invention.

## Claims

1. A polyamide composition comprising a polyamide comprising;
(a) about 3 to about 14 mole percent of repeat units derived from at least one aromatic dicarboxylic acid having 4 to 16 carbon atoms and/or at least one alicyclic dicarboxylic acid having 8 to 20 carbon atoms and at least one aliphatic diamine having 4 to 20 carbon atoms; and
(b) about 86 to about 97 mole percent of repeat units
• derived from decanedioic acid, dodecanedioic acid, and hexamethylenediamine, or
• derived from two or more of nonanedioic acid, decanedioic acid, undecanedioic acid, dodecanedioic acid, tridecanedioic acid, and tetradecanedioic acid; and hexamethylenediamine.

2. The polyamide composition of claim 1 wherein the polyamide is present in about 80 to about 99 weight percent.and further comprising and about 1 to about 20 weight percent of a plasticizer, wherein the weight percentages are based on the total weight of the composition.

3. The polyamide composition of claim 2 wherein the plasticizer is a sulfonamide.

4. The polyamide composition of claim 2 wherein the plasticizer is one or more of *N-*butylbenzenesulfonamide, *N-*(2-hydroxypropyl)benzenesulfonamide, *N-*ethyl-*o-*toluenesulfonamide, *N-*ethyl-*p-*toluenesulfonamide, *o-*toluenesulfonamide, and *p-*toluenesulfonamide.

5. The polyamide composition of claim 1 further comprising one or more of thermal, oxidative, and/or light stabilizers; mold release agents; colorants; and lubricants.

6. An article comprising the polyamide composition of claim 1.

7. A pipe comprising the polyamide composition of claim 1.

8. The pipe of claim 7 in the form of a vehicle radiator tube.

9. The pipe of claim 7 in the form of an undersea oil pipe.

10. The pipe of claim 7 in the form of an above-ground oil pipe.

11. The pipe of claim 7 in the form of an in-ground oil pipe.

12. A multilayered pipe comprising the polyamide composition of claim 1.

## Patentansprüche

1. Polyamidzusammensetzung umfassend ein Polyamid umfassend:
(a) etwa 3 bis etwa 14 Molprozent Wiederholungseinheiten, die von mindestens einer aromatischen Dicarbonsäure, die 4 bis 16 Kohlenstoffatome aufweist, und/oder mindestens einer alicyclischen Dicarbonsäure, die 8 bis 20 Kohlenstoffatome aufweist und mindestens einem aliphatischen Diamin, das 4 bis 20 Kohlenstoffatome aufweist, abgeleitet sind; und
b) etwa 86 bis etwa 97 Molprozent Wiederholungseinheiten
• die von Decandisäure, Dodecandisäure und Hexamethylendiamin abgeleitet sind oder
• von zwei oder mehreren von Nonandisäure, Decandisäure, Undecandisäure, dodecandisäure, Tridecandisäure und Tetradecandisäure; und Hexamethylendiamin abgeleitet sind.

2. Polyamidzusammensetzung nach Anspruch 1, wobei das Polyamid in einer Menge von etwa 80 bis etwa 99 Gewichtsprozent vorliegt und des Weiteren etwa 1 bis etwa 20 Gewichtsprozent eines Weichmachers umfasst, wobei die Gewichtsprozentsätze auf das Gesamtgewicht der Zusammensetzung bezogen sind.

3. Polyamidzusammensetzung nach Anspruch 2, wobei der Weichmacher ein Sulfonamid ist.

4. Polyamidzusammensetzung nach Anspruch 2, wobei der Weichmacher eines oder mehrere von *N-*Butylbenzölsulfonamid, *N-*(2-Hydroxypropyl)benzolsulfonamid, *N-*Ethyl-*o-*toluolsulfonamid, *N-*Ethyl-*p-*toluolsulfonamid, *o-*Toluolsulfonamid und *p-*Toluolsulfonamid ist.

5. Polyamidzusammensetzung nach Anspruch 1, des Weiteren ein oder mehrere von thermischen, oxidativen und/oder Lichtstabilisatoren; Formtrennmitteln, Farbmitteln; und Gleitmitteln umfassend.

6. Artikel umfassend die Polyamidzusammensetzung nach Anspruch 1.

7. Röhre umfassend die Polyamidzusammensetzung nach Anspruch 1.

8. Röhre nach Anspruch 7 in Form einer Fahrzeugkühlerröhre.

9. Röhre nach Anspruch 7 in Form einer Unterwasserölröhre.

10. Röhre nach Anspruch 7 in Form einer oberirdischen Ölröhre.

11. Röhre nach Anspruch 7 in Form einer in der Erde verlegten Röhre.

12. Mehrlagenröhre umfassend die Polyamidzusammensetzung nach Anspruch 1.

## Revendications

1. Composition de polyamide comprenant un polyamide comprenant :
(a) environ 3 à environ 14 pour-cent en moles de motifs de répétition dérivés d'au moins un acide dicarboxylique aromatique ayant 4 à 16 atomes de carbone et/ou au moins un acide dicarboxylique alicyclique ayant 8 à 20 atomes de carbone et au moins une diamine aliphatique ayant 4 à 20 atomes de carbone ; et
(b) environ 86 à environ 97 pour-cent en moles de motifs de répétition
• dérivés d'acide décanedioïque, d'acide dodécanedioïque, et d'hexaméthylène diamine, ou
• dérivés de deux ou plusieurs parmi l'acide nonanedioïque, l'acide décanedioïque, l'acide undécanedioïque, l'acide dodécanedioïque, l'acide tridécanedioïque et l'acide tétradécanedioïque ; et l'hexaméthylène diamine,

2. Composition de polyamide selon la revendication 1, dans laquelle le polyamide est présent en environ 80 à environ 99 pour-cent en poids et comprenant en outre environ 1 à environ 20 pour-cent en poids d'un agent plastifiant, dans laquelle les pourcentages en poids sont basés sur le poids total de la composition.

3. Composition de polyamide selon la revendication 2, dans laquelle l'agent plastifiant est un sulfonamide.

4. Composition de polyamide selon la revendication 2, dans laquelle l'agent plastifiant est l'un ou plusieurs des éléments parmi le *N-*butylbenzène sulfonamide, *N-*(2-hydroxypropyl)benzène sulfonamide, *N-*éthyl-*o-*toluène sulfonamide, *N-*éthyl-*p-*toluène sulfonamide, *o-*toluène sulfonamide, et *p-*toluène sulfonamide.

5. Composition de polyamide selon la revendication 1, comprenant en outre un ou plusieurs éléments parmi un(les) stabilisant(s) thermique(s), d'oxydation et/ou de la lumière ; agent(s) de démoulage ; colorant(s) ; et lubrifiant(s).

6. Article comprenant la composition de polyamide selon la revendication 1.

7. Conduite comprenant la composition de polyamide selon la revendication 1.

8. Conduite selon la revendication 7, sous la forme d'un tube de radiateur d'automobile.

9. Conduite selon la revendication 7, sous la forme d'un oléoduc sous-marin.

10. Conduite selon la revendication 7, sous la forme d'un oléoduc installé au-dessus du sol.

11. Conduite selon la revendication 7, sous la forme d'un oléoduc souterrain.

12. Conduite multicouche comprenant la composition de polyamide selon la revendication 1.
